# DEMANDE DE BREVET EUROPEEN

(11) **EP 1 291 234 A1**
(43) Date de publication de la demande: **12.03.2003**
(21) Numéro de dépôt: 02292007.8
(22) Date de dépôt: 09.08.2002
(51) Int. Cl.: B60N 2/08, B60N 2/02

(54) **Dispositif électrique de déverrouillage de glissière de siège**

(30) Priorité: 06.09.2001 FR 0111516
(71) Demandeur: Renault s.a.s., 92100 Boulogne Billancourt (FR)
(72) Inventeur: Garnault, Michel, 75020 Paris (FR); Leclerc, Jean-Philippe, 28130 Houx (FR); Michaud, Hervé, 28230 Epernon (FR); Turpin, Damien, 75017 Paris (FR)

(57) **Abrégé**

Dispositif électrique de déverrouillage de glissières de siège comportant au moins un moyen d'immobilisation d'une partie mobile (2c, 2d) de glissière par rapport à une partie fixe (2a, 2b), caractérisé en ce qu'il comporte au moins un actionneur (4) relié à une barre (5) qui comporte au moins à l'une de ses extrémités au moins une came (6) qui coopère avec le moyen d'immobilisation de ladite partie mobile (2c, 2d).

## Description

L'invention concerne un dispositif électrique de déverrouillage de glissière de siège permettant de reculer et d'avancer facilement ledit siège.

On connaît un dispositif de verrouillage de glissières de siège décrit dans la publication US-A-4961559 comportant une barre en forme de U dont les branches pivotent autour d'un axe, des moyens de verrouillage fixés sur les glissières et pouvant pivoter autour dudit axe, des moyens de rappel ainsi que des éléments longitudinaux fixés au plancher du véhicule dans lesquels ont été ménagés des crans qui coopèrent avec lesdits moyens de verrouillage. Lorsque l'utilisateur lève la barre, les moyens de verrouillage sortent des crans et l'utilisateur peut avancer ou reculer le siège. Lorsque l'utilisateur rabaisse la barre, les moyens de verrouillage s'enclenchent dans les crans et bloquent le siège. Ce dispositif présente l'inconvénient de ne pas être très ergonomique car le passager doit se pencher en avant pour faire avancer ou reculer le siège. Ensuite le passager doit se replacer correctement dans son siège afin de tester sa position et éventuellement procéder à de nouveaux réglages pour adapter ladite position. Ce dispositif est de plus complexe et encombrant.

On connaît également un dispositif de glissières électriques de siège décrit dans la publication US-A-4364536 fonctionnant à l'aide d'un moteur électrique. Une des glissières comporte un support longitudinal muni d'une fente dont une des parois comporte des dents. Un pignon relié au moteur électrique est placé de façon à ce qu'il puisse entrer en contact avec les dents du support et déplacer le siège. Cependant, ce type de dispositif tout électrique est assez lent. L'entraînement est de plus assez bruyant. Etant donné le dimensionnement du moteur électrique et des pignons pour tenir les efforts, ce dispositif est également lourd, volumineux et cher.

Afin d'améliorer l'ergonomie des glissières de sièges, il existe aussi des commandes déportées. Cependant, ce type de commandes est complexe, ce qui entraîne une augmentation du poids et du coût du siège.

Afin de pallier ces inconvénients, l'invention a pour objet un dispositif de déverrouillage électrique de glissière simple et peu encombrant permettant de déplacer facilement et silencieusement le siège d'avant en arrière.

L'invention a également pour objet un dispositif de déverrouillage électrique de glissière ayant un faible coût.

Selon une caractéristique de l'invention, le dispositif électrique de déverrouillage de glissières de siège comporte au moins un actionneur relié à une barre qui comporte au moins à l'une de ses extrémités au moins une came qui coopère avec le moyen d'immobilisation de ladite partie mobile.

Selon une autre caractéristique de l'invention, le moyen d'immobilisation est constitué d'un poussoir et d'un élément de blocage limitant les déplacements relatifs des parties de glissières entre elles.

Selon une autre caractéristique de l'invention, le dispositif électrique de déverrouillage de glissières de siège.

Selon une autre caractéristique de l'invention, l'élément de blocage est un peigne.

Selon une autre caractéristique de l'invention, la barre comporte une came à chacune de ses extrémités qui coopèrent respectivement avec les poussoirs.

Selon une autre caractéristique de l'invention, les poussoirs sont reliés à des moyens de rappel.

Selon une autre caractéristique de l'invention, un moyen de commande de l'actionneur est un bouton.

Selon une autre caractéristique de l'invention, un moyen de commande de l'actionneur est un capteur.

Selon une autre caractéristique de l'invention, l'actionneur est un vérin.

Selon une autre caractéristique de l'invention, le dispositif comporte au moins un système de contrôle du verrouillage.

Selon une autre caractéristique de l'invention, le dispositif comporte un capteur destiné à mémoriser la position du siège sur les glissières.

D'autres caractéristiques et avantages de l'invention apparaîtront à la lecture de la description d'exemples de réalisation d'un dispositif de déverrouillage électrique de glissières de siège au dessin annexé dans lequel :
- La figure 1 représente une vue du siège et des glissières.
- La figure 2 représente une vue schématique du système de déverrouillage.

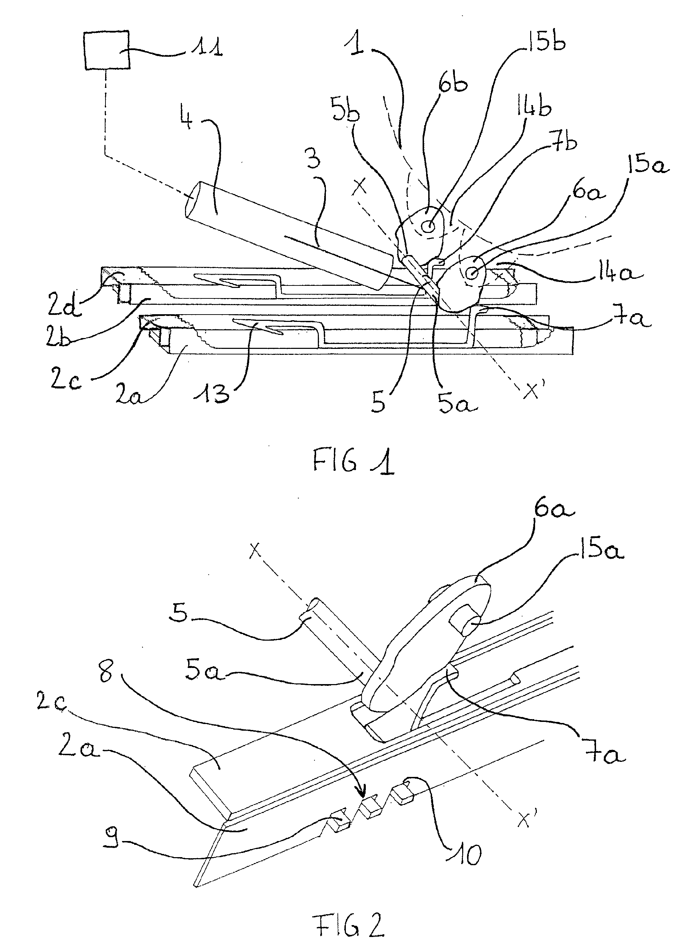

Tel que représenté sur la figure 1, un siège 1 est monté à translation sur deux glissières parallèles comportant chacune une partie fixe, respectivement 2a et 2b, et une partie mobile, respectivement 2c et 2d. La tige 3 d'un actionneur 4, dont la translation est produite par un moyen électrique, est reliée à une barre 5. L'actionneur 4 peut être par exemple un vérin électromagnétique dont le mécanisme est connu en soi. La barre 5 est positionnée transversalement sous le siège 1 et montée à pivotement autour d'un axe XX' sensiblement parallèle à la direction de ladite barre 5 par ses extrémités 5a et 5b. Les extrémités 5a et 5b comportent des cames 6a et 6b. Les cames 6a et 6b sont fixées sur des supports de siège 14a et 14b par des axes 15a et 15b.

Les cames 6a et 6b reposent sur des poussoirs 7a et 7b pouvant coulisser à l'intérieur des glissières 2a et 2b et sont destinés à commander des moyens de déverrouillage des glissières 2a et 2b.

Tel que représenté sur la figure 2, les moyens de déverrouillage sont constitués, par exemple, par des peignes horizontaux mobiles 8 qui comportent des dents 9 pouvant s'engager verticalement dans des crans 10 ménagés dans une paroi verticale des glissières 2a et 2b. Les poussoirs 7a et 7b sont reliés à des moyens de rappels 13 tels que des ressorts, par exemple.

Dans un premier mode de réalisation, un moyen de commande 11 de l'actionneur 4 est, par exemple, un bouton.

Lorsque le passager veut reculer ou avancer son siège, il appuie sur le bouton 11. La translation de la tige 3 de l'actionneur 4 entraîne la barre 5. Les cames 6a et 6b pivotent avec la barre 5 autour de l'axe XX' et appuient sur les poussoirs 7a et 7b qui coopèrent avec les peignes 8a et 8b. Les peignes 8a et 8b descendent et les dents 9 se désengagent des crans 10. Le passager peut alors faire coulisser manuellement le siège sur les glissières 2a et 2b de façon à faire avancer ou reculer ledit siège. Lorsque le passager cesse d'exercer une pression sur le bouton 11, l'actionneur 4 ne produit plus d'effort sur la barre 5. Les moyens de rappel 13 ramènent les poussoirs 7a et 7b. Les peignes 8a et 8b remontent et actionnent le verrouillage par enclenchement des dents 9 dans les crans 10.

Dans un deuxième mode de réalisation, le moyen de commande 11 de l'actionneur 4 est un capteur intégrant par exemple un système permettant de détecter le déplacement du siège et de mettre en oeuvre, alors, le système de déverrouillage pendant le coulissement du siège le long des glissières 2a et 2b, le verrouillage ayant lieu après un arrêt du coulissement du siège.

Ce dispositif, en évitant l'utilisation de tringlerie, permet d'obtenir des gains de poids par rapport à des glissières entièrement manuelles et ayant des commandes déportées.

Avantageusement, ce type de dispositif est moins sensible aux vibrations.

Comme il n'est pas nécessaire de se baisser pour atteindre la commande de siège, l'ergonomie est également améliorée par rapport à un système de glissières manuelles classique.

Dans un autre mode de réalisation, non représenté, ce dispositif peut être couplé à un système permettant d'offrir un accès plus facile aux places arrière. Un bouton situé sur le dossier du siège avant permet de déverrouiller les glissières afin de permettre le déplacement du siège. Au moment où l'on appuie sur le bouton, un capteur localisé au niveau des glissières, par exemple, mémorise la position initiale du siège sur ladite glissière, ce qui permettra de retrouver la position initiale du siège avant, au moment du verrouillage.

Le dispositif selon l'invention permet de prévoir une version manuelle et une version électrique comportant des éléments communs, telles que des glissières et des moyens de verrouillage communs, par exemple, de façon à diminuer les coûts.

Le système peut étalement être verrouillé électriquement.

## Revendications

1. Dispositif électrique de déverrouillage de glissières de siège comportant au moins un moyen d'immobilisation d'une partie mobile (2c, 2d) de glissière par rapport à une partie fixe (2a, 2b), **caractérisé en ce qu'**il comporte au moins un actionneur (4) relié à une barre (5) qui comporte au moins à l'une de ses extrémités au moins une came (6) qui coopère avec le moyen d'immobilisation de ladite partie mobile (2c, 2d).

2. Dispositif selon l'une quelconque des revendications précédentes, **caractérisé en ce que** le moyen d'immobilisation est constitué d'un poussoir (7) et d'un élément de blocage (8) limitant les déplacements relatifs des parties de glissières entre elles.

3. Dispositif selon l'une quelconque des revendications précédentes, **caractérisé en ce que** l'élément de blocage est un peigne (8).

4. Dispositif selon l'une quelconque des revendications précédentes, **caractérisé en ce que** la barre (5) comporte une came (6a, 6b) à chacune de ses extrémités qui coopèrent respectivement avec les poussoirs (7a et 7b).

5. Dispositif selon l'une quelconque des revendications précédentes, **caractérisé en ce que** les poussoirs (7a) et (7b) sont reliés à des moyens de rappel (13).

6. Dispositif selon l'une quelconque des revendications précédentes, **caractérisé en ce qu'**un moyen de commande (11) de l'actionneur (4) est un bouton.

7. Dispositif selon l'une quelconque des revendications 1 à 4, **caractérisé en ce qu'**un moyen de commande (11) de l'actionneur (4) est un capteur.

8. Dispositif selon l'une quelconque des revendications précédentes, **caractérisé en ce que** l'actionneur (4) est un vérin.

9. Dispositif selon l'une quelconque des revendications précédentes, **caractérisé en ce qu'**il comporte au moins un système de contrôle du verrouillage.

10. Dispositif selon l'une quelconque des revendications précédentes, **caractérisé en ce qu'**il comporte un capteur destiné à mémoriser la position du siège (1) sur les glissières (2a) et (2b).
